# EUROPEAN PATENT APPLICATION

(11) **EP 4 292 779 A1**
(43) Date of publication of application: **20.12.2023**
(21) Application number: 22201245.2
(22) Date of filing: 13.10.2022
(51) Int. Cl.: B25J 15/00, B25J 15/02

(54) **GRIPPER FOR A ROBOT**

(30) Priority: 13.06.2022 EP 22178626
(71) Applicant: Flip Robotics, 5200 Odense (DK)
(72) Inventor: WAIS, Omajed, 5200 Odense (DK)
(74) Representative: Dragsted Partners A/S

(57) **Abstract**

A gripper for a robot for gripping an object, where the gripper is configured to be coupled to an end of an robot arm and have a longitudinal axis, the gripper comprising: a gripping base part, a first gripping part having a first end connected with the gripping base part and a second end,a second gripping part having a first end connected with the gripping base part and a second end, the second end of the first gripping part and the second end of the second gripping part defining a gripping zone having a first axis extending across the gripping zone, where the second end of the first gripping part and/or the second end of the second gripping part are configured to manoeuvre in a direction along the first axis towards and away from the gripping zone, where the second end of the first gripping part and/or the second end of the second gripping part are provided with a rotational actuator configured to provide a torque to an object held in the gripping zone along a first rotational axis that is coaxial and/or parallel with the first axis.

## Description

### Technical field

A gripper for a robot for gripping an object, where the gripper is configured to be coupled to an end of an arm and have a longitudinal axis, the gripper comprising: a gripping base part, a first gripping part having a first end connected with the gripping base part and a second end, a second gripping part having a first end connected with the gripping base part and a second end.

### Background

In production facilities, there is an increase in the prevalence of robots that take over precision work that has previously been done using skilled human workers. The introduction of robots reduces the stress of the human workforce, increases the reliability and the repeatability of the work being performed and provides a uniformity in the quality of the work.

However, robots are often relatively limited in their capabilities, and their range of motion is often limited to a plurality of axes, where robotic arms are often limited to six-axis of motion, providing six degrees of freedom. The range of motion of robotic arms may often be sufficient for a number of tasks or operations that the robot has to perform but may be insufficient and ineffective for other types of operation. Such operations may e.g. be the positioning of objects in a specific orientation relative to where the object is to be received.

One such operation may e.g. be in a production line, such as a toy production line, where a specific object, such as the hair of a figure has to be positioned in its correct position on the head of the figure. A robotic arm having a traditional gripper may grip the hair in a random orientation, which means that the robotic arm has to change the orientation of the hair into its correct position prior to the hair being placed on the head of the figure. This may cause serious problems for a robotic arm, as the degrees of freedom of the robotic arm may not be sufficient to be capable of orienting the hair object in the correct manner, without releasing and regripping the hair, prior to the placement of the hair object on the head of the figure. One way of solving this problem may be found in providing the object in the same orientation every time the robotic arm picks up the object, but this may require further robotic arms or machinery that can solve this issue.

Thus, there is a need to provide an improved gripper for a robot that can overcome the above drawbacks.

### Description

In accordance with the invention, a gripper for a robot for gripping an object is provided, where the gripper is configured to be coupled to an end of an robot arm and has a longitudinal axis, the gripper comprising: a gripping base part, a first gripping part having a first end connected with the gripping base part and a second end,a second gripping part having a first end connected with the gripping base part and a second end, the second end of the first gripping part and the second end of the second gripping part defining a gripping zone having a first axis extending across the gripping zone, where the second end of the first gripping part and/or the second end of the second gripping part are configured to manoeuvre in a direction along the first axis towards and away from the gripping zone, where the second end of the first gripping part and/or the second end of the second gripping part are provided with a rotational actuator configured to provide a torque to an object held in the gripping zone along a first rotational axis that is coaxial and/or parallel with the first axis.

Within the understanding of the present disclosure, the gripping parts may have a first end and a second end, where the first end may be seen as the part that faces the gripping base part, and the second end may be seen as the part that faces away from the gripping base part. The first end and the second end may be seen as an elongated part of the gripping part, where the first end and the second end may be separated in a central area of the gripping part by a central part. Thus, the term "end" may also be understood as a predefined part of the gripping part and does not necessarily mean the ultimate part of the gripping part.

Within the understanding of the present disclosure, the gripping zone may be understood as a space that may be bound by one or more parts of the gripper. Thus the gripping zone may e.g. be the space that is between the first gripping part and the second gripping part. The gripping zone may further be bound by an upper boundary that may be the gripping base, so that the gripping zone may be defined by the gripping parts and the gripping base. The gripping zone may also be seen as an imaginary point in space which may be seen as a central part of the area where the gripper is capable of holding an object. The gripping zone may have a central point, where the central point may be in an area where the longitudinal axis of the gripper intersects the first axis.

Within the understanding of the present disclosure, the rotational actuator may be a dynamic part, where the rotational actuator may be configured to rotate an object that may be held by the first gripping part and the second gripping part. The rotational actuator may be positioned on one side of the gripping zone, where friction or mechanical coupling or attachment between the rotational actuator and the object may be utilised to rotate the object along the first rotational axis.

The gripper in accordance with the present disclosure is capable of gripping an object in the gripping zone, where the first gripping part and the second gripping part provide a gripping force in a direction towards each other in a direction along the first axis in order to come into contact with the object and fix the object relative to the gripper in the gripping zone. The gripper may be utilised to transport the object from one position to another, similar to conventional grippers for robot arms. The second end of the first gripper part and/or the second gripper part may be provided with a rotational actuator, where the rotational actuator is in communication with the object, so that when the rotational actuator is activated and where the rotational actuator rotates along the first rotational axis, the torque applied by the rotational actuator is transferred to the object, causing the object to rotate in accordance with the rotational movement of the rotational actuator. This allows the object to be rotated, along at least one rotational axis, while it is being held in the gripper, so that the orientation of the object relative to the gripper parts may be adjusted after it has been gripped.

This allows the gripper to be utilised to position and place objects that are intended to have a specific orientation relative to a receiving object. Traditionally, if a gripper has gripped an object, where the object may be seen as being upside down, where the application part of the object may face the gripping base, the robotic arm cannot always be manipulated into a position where the object can be placed correctly on its target object. The gripper according to the present disclosure can overcome this, in that the rotational actuator may be activated, causing the object to rotate relative to the gripping base and an object that has e.g. been gripped in an upside-down position, may be rotated into a right side up position, and the object may be positioned correctly on the target object.

Thus, by providing a rotational actuator in a gripper, in accordance with the present disclosure, it is possible to increase the flexibility of a robotic arm, as the gripper is capable of rotating the object irrespective of the position of the robotic arm. This may increase the useability of robotic arms in precision assembly lines, where the gripper may reduce the need to provide the object in a predefined orientation relative to the gripper prior to use. The gripper may therefore grip an object in one rotational orientation but may release the object in a completely different rotational orientation.

In one exemplary embodiment, the second end of the first gripping part and/or the second gripping part may be provided with a rotational part having a second rotational axis that is coaxial and/or parallel with the first axis. The rotational part may be a passive rotational part, where the rotational part may be in communication with the object to be gripped, allowing the rotational movement of the object to be isolated from the first gripping part and/or the second gripping part. It may be understood that if the first gripping part has a rotational actuator, the rotational part may be on the opposing gripping part to allow the rotational movement to be performed on the object, without damaging the gripping part or the object. The rotational part may comprise a ball bearing. The second rotational axis of the rotational part may be positioned in such a way that it is coaxial with the first rotational axis, so that when the object is rotated, the rotational axis of the object may be along the first and/or the second rotational axis, and/or the first axis that extends across the gripping zone.

In one exemplary embodiment, a central part of the first gripping part and/or central part of the second gripping part may be pivotally connected with the gripping base part. The pivotal connection allows the gripping part to have a fulcrum that is positioned at a distance from the first ultimate end or the second ultimate end of the gripping part. Thus, if a force is applied on one side of the fulcrum, the force may be transferred across the pivotal connection to the opposing side of the fulcrum. The pivotal connection may allow a force to be applied to the upper part of the gripping part, in one direction, allowing the force to be transferred in an opposite direction to the object to allow the object to be gripped by the gripping part. The same may be stated about the opposing gripping part, where the opposing gripping part may have a similar pivot point, allowing force to be transferred in an opposing direction on the opposite side of the pivot point.

Furthermore, the first end of the first gripping part and/or the second end of first gripping part may optionally be pivotally connected with the gripping base part. The pivotal connection may be positioned between the ultimate end of the gripping part and the central pivotal connection. The pivotal connection of the first end of the gripping part may be utilised to apply a force to the gripping part, so that the force applied via the pivotal connection may be transferred to the object via the second end of the gripping part. Thus, each gripping part may be provided with two pivotal connections, one positioned in a central part and another positioned between the central pivotal connection and the ultimate end.

In one exemplary embodiment, the gripper may further comprise a first gripping actuator part connecting the first end of the first gripping part with the gripping base part, and/or a second gripping actuator part connecting a central part of the first gripping part. The first and second gripping actuator parts may be connected with a gripping actuator, where the gripping actuator is configured to apply a force to the first and the second gripping actuator parts. Thus, the force applied to the first and/or second gripping actuator parts may be transferred to the gripping part, allowing gripping force to be applied to the object. In one embodiment, the first gripping actuator part may be utilised to provide a force, while the second gripping actuator may be utilised to provide a counterforce, such as when the gripping part has a pivotal fulcrum. Thus, the first gripping actuator may apply a force to the first end of the gripping part, while the second gripping actuator part provides a counterforce or a base for a fulcrum point of the gripping part. The first gripping actuator part and/or the second gripping actuator part may also be utilised on the opposing gripping part, so that the first gripping part and the second gripping part each has a pair of first and second gripping actuator parts.

When a gripping force is applied to the object, the first gripping part provides a counterforce to the second gripping part and vice versa.

In one exemplary embodiment, the first gripping part and/or the second gripping part are connected with the gripping base part using a parallelogram pivotal connection. The parallelogram pivotal connection may be utilised to maintain the angle of the gripping part relative to the gripping base and/or the opposing gripping part. Furthermore, the parallelogram pivotal connection may connect the first gripping part to the gripping base, where the pivotal connections on the gripping part are positioned between the central part of the gripping part and the first end of the gripping part. The parallelogram connection may be obtained using a first gripping actuator part and a second gripping actuator parts, where the first gripping actuator part and the second gripping actuator parts are pivotally connected with the first gripping part and the gripping base. The pivotal connections on the first gripping part and the second gripping part may be at a distance from each other that is substantially similar to the distance between pivotal connections on the gripping part. Thus, if a pivotal force is applied to one of the first gripping actuator part or the second gripping actuator part, the opposing gripping actuator part will follow the movement of the gripping actuator part that has a force applied to it. Furthermore, the positioning of the gripping actuator parts may ensure that the first and/or the second rotational axis of the first gripping part and/or the second gripping part are parallel to each other, so that the opening movement and the closing movement of the gripping part ensure that the rotational axis is perpendicular to the longitudinal axis of the gripper. The angle of the rotational axis (first or second) of the first gripper part and/or the second gripper part are configured to be stationary relative to the longitudinal axis of the gripper. Thus, the gripper may comprise a plane that includes at least part of the longitudinal axis. The first or second rotational axis of the first and/or the second gripper part may intersect the plane where the first and/or the second rotational axis are normal to the plane. Thus, during opening and closing of the gripper the first and/or second rotational axis may from one position on the plane to a second position of the plane, but will remain at a normal to the plane, i.e. be orthogonal to the plane in at least two dimensions.

In one exemplary embodiment, the first rotational axis may be substantially perpendicular to the longitudinal axis of the gripper. The first rotational axis may have a constant angle relative to the longitudinal axis of the gripper, where the first rotational axis is substantially parallel to the longitudinal axis in any position of the gripper parts. Thus, the opening and the closing of the gripper parts may be performed without changing the relationship between the rotational axis and the longitudinal axis, even though the longitudinal position of the rotational axis may change relative to the longitudinal axis, the angle angular relationship between the two axes is maintained.

The relationship between the rotational axis and the longitudinal axis or the plane ensures that the rotational axis is maintained in any position of the first gripper part and/or the second gripper part, so that when the gripper parts are in their fully open position, the rotational axis is perpendicular to the longitudinal axis, and also when the gripper parts are in their fully closed position, the rotational axis is perpendicular to the longitudinal axis. This may also be the case in any opening position of the gripper parts between its fully open and fully closed position. Thus, when an object is gripped, the object may be rotationally manoeuvred along the rotational axis irrespective of the degree of opening position of the gripper parts.

In one exemplary embodiment, the second end of the first gripping part and/or the second gripping part may comprise a contact surface for providing contact between the gripper and the object to be gripped. The contact surface may be seen as the part of the gripper that is intended to come into contact with the object to be gripped. The contact surface may be positioned on both the first gripping part and the second gripping part or one of the two gripping parts, where the contact surface may have a normal that is parallel to the first axis, the first rotational axis, the second rotational axis, or may be coaxial (coextending) with the first axis, the first rotational axis and the second axis. The normal may be positioned at a central area of the contact surface, where the normal may be placed at a centre of an imaginary circle, where other parts of the contact surface may be seen as being at a radial distance from the centre. Thus, if the contact surface is rotated, the rotational axis of the contact surface will be in the centre, allowing the contact surface to provide a uniform rotation of the object. The normal may be coaxial with the first and/or second rotational axis. The first gripper part may comprise a first contact surface, and the second gripper part may comprise a second contact surface. The first and/or the second contact surfaces may be rotationally connected with the first and/or the second gripper part, allowing the object to rotate relative to the first and/or the second gripper part and/or the gripper base. The contact surface may be a planar surface, a curved surface, or any kind of surface that may be envisioned to come into contact with an object. Furthermore, should the object be a soft object, the contact surface may be in the form of a fork like structure that may penetrate the object and provide support to the object. Thus, the contact surface may also be understood as a support part of the first gripper part and/or the second gripper part, and the term contact surface may be replaced with the term support part.

In one exemplary embodiment, the contact surface may face the longitudinal axis of the gripper. This may mean that the contact surface may face the gripping zone of the gripper, and where the first axis may intersect the contact surface. The contact surface is intended to be positioned in such a way that when an object is positioned in the gripping zone, the contact surface faces the object to be gripped. The contact surface may be in rotational communication with the rotational actuator and/or the rotational part, where the contact surface may rotate together with the object, and/or may be capable of rotating relative to the first and/or the second gripper parts.

In one embodiment, the contact surface and/or the first and/or the second gripper part may comprise a surface area where the surface area may have a coating or a composition having a high friction coefficient. By providing a surface area having a high friction coefficient, it may be possible to hold the object securely, and thereby possibly reducing the gripping force necessary to hold the object in position relative to the gripper. The high friction surface may also improve the rotation of the object, as the object may have a moment of inertia, where the torque applied via the rotational actuator may be transmitted via the contact surface and its frictional surface. Thus, there is a reduced risk that the object slips relative the contact surface when a rotational force is applied.

In one embodiment, the contact surface a distance from the inner surface of the first and/or second gripper part. The first gripping part may have an inner surface, where the inner surface faces the gripping zone. The contact surface may be offset in a direction towards the gripping zone relative to the inner surface of the first gripping part. This means that when an object is gripped, the contact surface comes into contact with the object, and a space is arranged between the inner surface of the gripping part and the object. Thus, there is a reduced risk that the object comes into contact with the inner surface of the gripping part. This may be especially advantageous when the object is a non-symmetrical object, and the rotation of the object may cause the space between the inner surface of the gripping part and the object to be reduced, as the side wall of the object moves closer to the inner surface.

In one exemplary embodiment, the second end of the first gripping part may comprise a first contact surface, the second gripping part may comprise a second contact surface for providing contact between the gripper and the object to be gripped, where the first contact surface may have a first normal, the second contact surface may have a second normal, where the first normal and the second normal may be one or more of parallel, coaxial, coextending with the first rotational axis, the second rotational axis and/or the first axis. This means that the contact surfaces face each other and may have an orientation that does not change during opening and closing movement of the gripping parts. When the gripper parts are moved into an opening position, the first contact surface and the second contact surface may have a first distance along the first axis, and when the gripper parts are moved into a closing position, the first contact surface and the second contact surface may have a second distance along the first axis, where the second distance is shorter than the first distance.

In one exemplary embodiment, the first gripping part may have a primary axis and the second gripping part may have a secondary axis, where the primary axis and/or the secondary axis may be maintained in their angular position relative to each other during the operation of the gripper. The primary axis and the secondary axis of the first and second gripping parts may be imaginary axis that may extend through a central area of the gripping parts, along a surface of the gripping parts, may intersect the gripping part in certain areas. When the primary axis and/or the secondary axis have been identified, the operation of the gripper will maintain the position of the primary axis and the secondary axis relative to each other. The only movement of the axis/axes may be seen as the distance between the primary axis and the secondary axis, and where the angular position between the two axes is maintained during the operation of the gripper. The operation of the gripper may mean the opening and closing movement of the gripper parts.

In one exemplary embodiment, the rotational actuator may be an electrical motor, optimally an electrical step motor, optionally an electrical motor that divides a full rotation into a plurality of steps, where the motor's position may be moved and held in any position of the motor. By providing a rotational actuator that is capable of controlling the angular position of the object, it is possible to control the rotation of the object precisely for the purpose of orienting the object in the correct manner.

### Brief description of the drawings

The following is an explanation of exemplary embodiments with reference to the drawings, in which:
Fig. 1 is a front view of a gripper in accordance with the present disclosure,
Fig. 2 is a perspective view of a gripper in accordance with the present disclosure,
Fig. 3 is a cross sectional view taken along view III-III seen in Fig. 1, and
Fig. 4A shows a gripper in a partially open position, and
Fig. 4B shows a gripper in a partially closed position.

### Detailed description

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

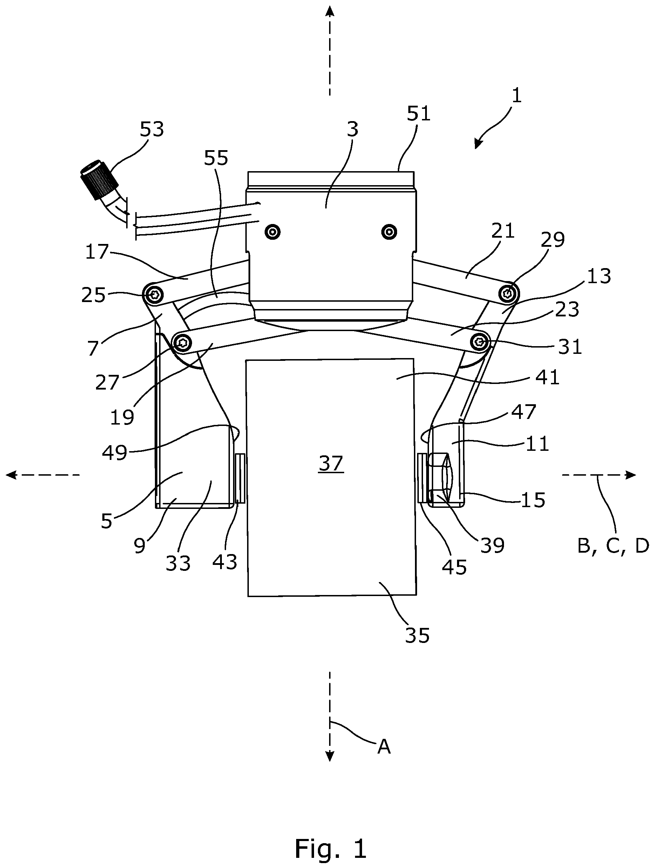

Fig. 1 shows a gripper 1 for a robot (not shown) in accordance with the present disclosure, the gripper 1 having a longitudinal axis A, a gripping base part 3, a first gripper part 5 having a first end 7 and a second end 9, a second gripper part 11, having a first end 13 and a second end 15. The first gripping part 5 and the second gripping part 11 are connected to the gripping base part 3 via a first gripping actuator part 17 and a second gripping actuator part 19, a third gripping actuator part 21 and a fourth gripping actuator part 23.

The first gripping part 5 and the second gripping part 11 are pivotally connected to the gripping actuator parts 17, 19, 21, 23 via pivotal connections 25, 27, 29, 31 and the gripping actuator parts 17, 19, 21, 23 are pivotally connected to the gripping base 3, via pivotal connections (not shown). One or more of the gripping actuator parts 17, 19, 21, 23 may be actuated via an electrical motor that may transfer a force configured to open and close the first gripping part 5 and the second gripping part 11 into a gripping zone 37. The end of the gripping actuator parts 17, 19, 21, 23 may be provided with teeth, allowing an electrical motor using matching cogs and/or cogwheels or other ways of transferring a force to the gripping actuator parts 17, 19, 21, 23 inside the gripping base 3.

The second end 9 of the first gripping part 5 is provided with a rotational actuator 33, where the rotational actuator may provide a rotational force to an object 35 that is positioned in a gripping zone 37 that is positioned in between the first gripping part 5 and the second gripping part 11. The rotational actuator 33 may be an electrical motor, such as an electric stepping motor, providing precise angular force to the object 35 when the object 35 is gripped by the gripper 1. The rotational actuator 33 may have a first rotational axis C, which extends in a direction towards the second gripping part 11, where the rotational axis C is coaxial with the first axis B of the gripper 1, where the first axis B extends across the gripping zone 37. In this example, the second gripping part is provided with a rotational part 39, that is positioned opposite the rotational actuator 33, where the rotational part has a second rotational axis D that may be coaxial with the first rotational axis C and/or the first axis B. The rotational part 39 may comprise a ball bearing, allowing and thereby reducing any rotational friction between the object 35 and the second gripping part 11. The first axis B may be perpendicular to the longitudinal axis A of the gripper.

Thus, when an object 35 is gripped, as seen in Fig. 1, the object may be rotated along the first rotational axis C and the second rotational axis D, allowing the top part 41 of the object 35 to be rotated into a downwards direction E so that the top part 41 may face downwards. This allows the object to be rotated along the rotational axis C and D after the object has been gripped by the gripper, and thereby change the orientation of the object during operation of the gripping arm and without having to release the object during operation.

The first gripping arm 5 may be provided with a first contact surface 43 and the second gripping arm 11 may be provided with a second contact surface 45, where the first 43 and the second contact surfaces are offset in a direction towards the gripping zone 37 away from a first inner surface 47 of the first gripping part 5 and a second inner surface 49 the second gripping part 11. The first contact surface 43 and the second contact surface 45 are positioned in the vicinity of the second ends 9, 13 of the first 5 and second gripping parts 11. Thus, when the first gripping arm 5 and the second gripping arm are moved towards their closed position to grip an object, the object comes into contact with the first contact surface 43 and the second contact surface 45. The first contact surface 43 and the second contact surface 45 may be rotationally connected with the rotational actuator 33 and the rotational part 39, allowing the rotational freedom and the rotational force to be transmitted to the object 35 and the friction to be reduced on the opposing side at the second gripping part 11, allowing the object 35 to rotate freely in a plane that is orthogonal to the rotational axis C and/or D or the first axis B, where the plane may include or be parallel to the longitudinal axis A.

The gripping base 3 may have a base end 51 that is configured to be connected to a robotic arm, where the gripping base 3 and the gripper may be rotationally coupled to the robot, allowing the gripper 1 and/or the gripping base to rotate along a rotational axis that is identical to the longitudinal axis A of the gripper 1.

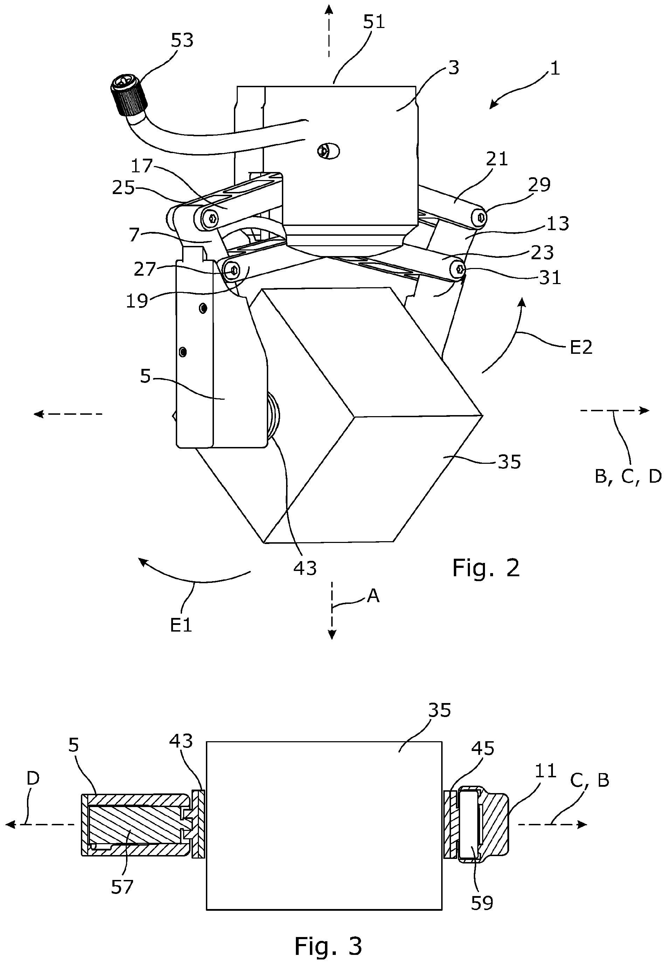

Fig. 2 shows a perspective view of the same as seen in Fig. 1 where the rotational movement of the object 35 in the gripping zone 37 may be seen along the arrows E1 and E2 that show the rotational movement in opposite directions along the rotational axis C and/or D. Thus, by rotation the object 35 it may be possible to alter the orientation of the object after the object has been gripped by the gripper 1.

The gripper 1 may be provided with a signal and power connection 53 allowing power to be applied to the actuators of the gripper 1 and to send control signals that are received by the actuators and performing a movement in accordance with the control signals sent. Furthermore, the gripper 1 may further comprise a rotational actuator power and signal connection 55, where the power and signal connection 55 provides electrical power to the rotational actuator as well as control signals to control the rotation and the angle of the rotational actuator 33.

Fig. 3 shows a cross sectional view of the first gripping part 5 and the second gripping part 11, taken along the line III-III shown in Fig. 1. The present view shows how the rotational actuator 33 is connected to the first contact surface 43, where the rotary part 57 of the electrical motor is rotationally connected to the first contact surface 43, or support part, so that the rotation of the rotary part 57 along the rotational axis C is transferred into a rotational force applied via the contact surface 43 to the object 35. On the opposite side, the second contact surface 45 is in contact with the side of the object 35, where the second contact surface 45 (or the support part) is rotationally stationary relative to the object, so that when the rotational actuator applies a rotational force to the object, the rotational force is transferred to the contact surface 45 (second support part). However, the second contact surface 45 is connected to the second gripping part 11 via a ball bearing 59, where the ball bearing absorbs the rotational force and isolates the rotational movement of the object 35 from the second gripping part 11.

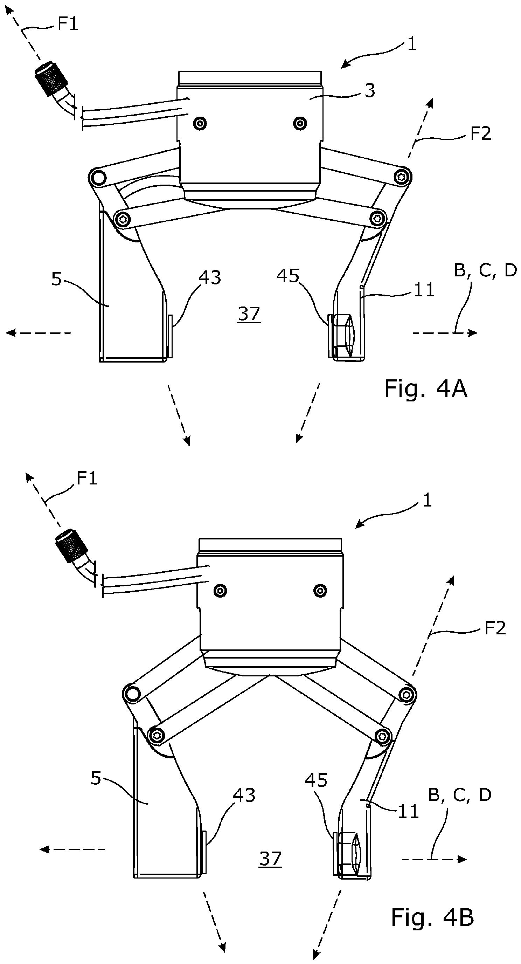

Fig. 4A shows the gripper 1 in an open position, where the first gripping part 5 and the second gripping part are at a first distance. The first gripping part 5 has a first primary axis F1, and the second gripping part 11 has a secondary axis F2. The first rotation axis C of the first gripping part and the second rotation axis D of the second gripping part 11 are seen as being coaxial in the present position of the gripping arms 5, 11. In Fig. 4B, the gripper has been manoeuvred in a closing direction, where the distance between the first gripping part 5 and the second gripping part 11 has been reduced, and the distance between the first contact surface 43 and the second contact surface 45 has been reduced. This movement may be utilised to grip an object, while a movement in an opposite direction (as seen in Fig. 4A may be used to release an object). In Fig. 4B, it can be seen that the primary axis F1 and the secondary axis F2 have been moved relative to each other, where it is only the distance between the two that has been changed. However, the angular relationship between the two axes F1 and F2 is the same, so that the angle in a first and/or a second dimension are identical to that shown in Fig. 4A. Furthermore, it may be seen that even if the gripping parts 5 and 11 have been moved in a closing direction, the rotational axes C and D are still coaxial, and coaxial with the first axis B. Furthermore, the rotational axes C and D may be perpendicular to the longitudinal axis of the gripper 1.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Gripper
- 3: Gripping base part
- 5: First gripper part
- 7: First end of first gripper part
- 9: Second end of first gripper part
- 11: Second gripper part
- 13: First end of second gripper part
- 15: Second end of second gripper part
- 17: First gripping actuator part
- 19: Second gripping actuator part
- 21: Third gripping actuator part
- 23: Fourth gripping actuator part
- 25: Pivotal connection
- 27: Pivotal connection
- 29: Pivotal connection
- 31: Pivotal connection
- 33: Rotational actuator
- 35: Object
- 37: Gripping Zone
- 39: Rotational part
- 41: Top part of object
- 43: First contact surface
- 45: Second contact surface
- 47: First inner surface
- 49: Second inner surface
- 51: Base end
- 53: Signal and Power connection
- 55: Second signal and power connection
- 57: Rotary part
- 59: Ball bearing
- A: Longitudinal Axis of Gripper
- B: First axis
- C: First rotational axis
- D: Second rotational axis
- E1: Rotational movement
- E2: Rotational Movement
- F1: Primary axis
- F2: Secondary axis

## Claims

1. A gripper for a robot for gripping an object, where the gripper is configured to be coupled to an end of an arm and have a longitudinal axis, the gripper comprising
- a gripping base part;
- a first gripping part having a first end connected with the gripping base part and a second end, and
- a second gripping part having a first end connected with the gripping base part and a second end,
the second end of the first gripping part and the second end of the second gripping part defining a gripping zone having a first axis extending across the gripping zone, where the second end of the first gripping part and/or the second end of the second gripping part are configured to manoeuvre in a direction along the first axis towards and away from the gripping zone,
where the second end of the first gripping part and/or the second end of the second gripping part are provided with a rotational actuator configured to provide a torque to an object held in the gripping zone along a first rotational axis that is coaxial and/or parallel with the first axis.

2. A gripper for a robot in accordance with claim 1, where the second end of the first gripping part and/or the second gripping part is provided with a rotational part having a second rotational axis that is coaxial and/or parallel with the first axis.

3. A gripper for a robot in accordance with any of the preceding claims, where a central part of the first gripping part and/or central part of the second gripping part are pivotally connected with the gripping base part and optionally where the first end of the first gripping part and/or the second end of first gripping part are pivotally connected with the gripping base part.

4. A gripper for a robot in accordance with any of the preceding claims, where the gripper further comprises a first gripping actuator part connecting the first end of the first gripping part with the gripping base part and a second gripping actuator part connecting a central part of the first gripping part.

5. A gripper for a robot in accordance with any of the preceding claims, where the first rotational axis is substantially perpendicular to the longitudinal axis of the gripper.

6. A gripper for a robot in accordance with any of the preceding claims, wherein the second end of the first gripping part and/or the second gripping part comprises a contact surface for providing contact between the gripper and the object to be gripped.

7. A gripper for a robot in accordance with claim 6, wherein the contact surface faces the longitudinal axis of the gripper.

8. A gripper for a robot in accordance with any of the preceding claims, wherein the second end of the first gripping part comprises a first contact surface and the second gripping part comprises a second contact surface for providing contact between the gripper and the object to be gripped, where the first contact surface has a first normal and the second contact surface has a second normal, where the first normal and the second normal are one or more of parallel, coaxial or coextending.

9. A gripper for a robot in accordance with any of the preceding claims, wherein the first gripping part has a primary axis, and the second gripping part has a secondary axis, where the primary axis and/or the secondary axis are maintained in their angular position relative to each other during the operation of the gripper.

10. A gripper for a robot in accordance with any of the preceding claims, wherein the rotational actuator is an electrical motor, optimally an electrical step motor, optionally an electrical motor that divides a full rotation into a plurality of steps, where the motor's position may be moved and held in any position of the motor.

11. A gripper for a robot in accordance with any of the preceding claims, wherein the first gripping part and/or the second gripping part are connected with the gripping base part using a parallelogram pivotal connection.
